# EUROPEAN PATENT SPECIFICATION

(11) **EP 1 668 269 B1**
(45) Date of publication and mention of the grant of the patent: **11.02.2009**
(21) Application number: 04765730.9
(22) Date of filing: 01.10.2004
(51) Int. Cl.: F16D 23/02

(54) **FRICTION MATERIAL FACING AND METHOD FOR PROVIDING SUCH FRICTION MATERIAL FACING**
REIBMATERIALBELAG UND VERFAHREN ZUR BEREITSTELLUNG SOLCH EINES REIBMATERIALBELAGS
REVETEMENT EN MATERIAU DE FROTTEMENT ET PROCEDE PERMETTANT D'OBTENIR UN TEL REVETEMENT

(30) Priority: 02.10.2003 US 677565; 02.10.2003 US 677577
(43) Date of publication of application: 14.06.2006
(73) Proprietor: Sulzer Friction Systems (Germany) GmbH, 28719 Bremen (DE)
(72) Inventor: RICH, Jonathan, M., Beavercreek, OH 45432 (US); NELS, Terry, E., Xenia, OH 45385 (US); SCHUELER, Eric, A., Maineville, OH 45039 (US); GUTHRIE, Douglas, B., Centerville, OH 45458 (US); KÖSTER, Dietmar, 27711 Osterholz-Scharmbeck (DE)
(74) Representative: Kluthe, Stefan
(86) International application number: PCT/EP2004/010956
(87) International publication number: WO 2005/036006

(56) References cited:
- EP-A- 0 550 961
- US-A- 4 260 047
- US-A- 4 445 602
- US-A- 4 878 282
- US-A- 5 101 953
- US-A- 5 585 166

## Description

### BACKGROUND OF THE INVENTION

### 1. FIELD OF THE INVENTION

This invention relates to a friction material facing, a friction member comprising such friction material facing and a method for providing such friction material facing and friction member.

### 2. DESCRIPTION OF PRIOR ART

In clutches, brakes, manual or automatic transmissions, limited slip differentials, hoists and similar friction power transmissions and energy absorption devices, there is generally provided one or more sets of cooperating members in which one of the cooperating members drives the other. It is not uncommon for these cooperating members to move in a cooling medium or liquid, which is generally some type of lubricating oil, and frequently the oil is forced to circulate about and between the engaging surfaces of the cooperating member so as to continuously lubricate and cool them. In order to accomplish circulation of the cooling medium within blocker rings, clutch plate, transmission bands and the like, the prior art has provided grooves or slots directly in the engaging surfaces of one or both of the cooperating members or in friction materials fixed thereto. For example, various materials and devices may have a brass coating or a paper lining as seen in U.S. Patent Nos. 4,267,912; 4,878,282; 4,260,047; 6,065,579; and 5,615,758.

US 5585166 discloses a friction material facing comprising a first and a second surface according to the preamble of claim 1.

In the past, forming grooves within the friction materials of cooperating members typically added complexity to the manufacturing of such friction material and the power transmission-absorption device.

U.S. Patent 4,878,282 illustrates a method for producing friction plate, synchronizer blocking rings and similar structures which use friction lining material applied as a continuous member on a support where the ends of the grooves are open by removal of the friction lining material which close the grooves. This requires several manufacturing steps, including cutting the material, assembling the material to the support, densifying the material once it was on the support and the trimming of a portion of the material. Unfortunately, the use of this type of process created, for example, about 20% scrap material.

It is therefore object of the invention to provide an improved friction material facing which allows an improved circulation of cooling medium and allows an easy production with less scrap material.

This object is achieved by a friction material facing having the features defined in claim 1, a friction member having the features defined in claim 15 and a method for providing a friction material facing having the features as defined in claim 17. Preferred embodiments are defined in the respective subclaims, the description and the drawings.

### SUMMARY OF THE INVENTION

The invention allows to facilitate increasing and controlling fluid flow across a facing material on a part, such as a blocker ring, clutch plate or the like.

The invention provides a plurality of channels having varying dimensions, such as depth, to achieve desired fluid flow characteristics.

According to the invention the friction material facing comprises in a first surface at least on first and one second channel. These channels are provided to lead away the cooling fluid from the surface of the friction material facing. According to the invention the first and second channels have a different depth. This allows to provide more or longer channels in the surface of the friction material facing without loosing the stability of the friction material facing. According to the invention it is possible to provide more and/or larger or deeper channels and at the same time to achieve a sufficient stability of the friction material facing which allows an easy handling of the friction material facing when attaching the friction material facing to a support element like a synchronizer ring.

Preferably said first predetermined depth traverses the entire distance between the first and second surfaces of the facing. This means that the first channel is connecting the two opposed surfaces of the friction material facing. This allows to provide a channel in the friction material facing having the maximal depth to allow a maximal fluid flow through the channel.

Further, it is preferred that said second predetermined depth is less than one hundred percent of the distance between the first and second surface. This design ensures that at the bottom of the second channel there is still material connecting both sides of the channel and holding the adjacent parts of the friction material facing together. The part forming the bottom of the second channel adjacent to the second surface of the friction material facing is forming a connector portion between both sides of the channel. This allows to provide channels extending across the entire first surface from one edge to the opposed second edge of the friction material facing without completely dividing the friction material facing in two or more parts. The design of the second channel having a depth less than the thickness of the friction material facing ensures that the entire friction material facing is kept in one part even if provided with channels extending across the entire width of said facing. This makes it easy to handle the friction material facing when attaching it to a support member.

In a further preferred embodiment the friction material facing according to the invention is provided with a plurality of said first and/or said second channels in said first surface, wherein the channels are spaced from each other. The plurality of first channels may be distributed over the entire first surface to allow to drain off fluid from the entire surface of the friction material facing. It is possible to arrange either a plurality of first or second channels or a plurality of first and second channels to allow an improved fluid flow in each part of the friction material facing.

Preferably at least one of said second channels is situated between a pair of said first channels. For example a plurality of second channels may be arranged so that each second channel is arranged between two of the first channels.

Further, it is preferred that first and second channels are arranged to allow fluid to communicate from a first side of the friction material facing to a second side. Preferably a plurality of spaced first channels is associated with a first area at the first side, whereas said second channels enable fluid to communicate from at least one of that plurality of spaced first channels to a second area associated with a second edge of the friction material facing.

Further, it is preferred that at least one second channel is coupled with said at least one first channel to allow fluid communication between said first and said second channel or vice versa. This allows fluid to communicate from a first area at a first side of the friction material facing through the first and second channel to a second area at the second side or edge of the friction material facing, respectively. The first and second channel may be coupled in different patterns for example the second channel may extend as elongation of the first channel in the same direction. Thereby first and second channels may connect the two opposed edges of the friction material facing. Since the second channel may have a depth less than the thickness of the facing it is ensured that all parts of the facing are held together, so that the material is not separated in several parts by the channels. It is also possible that one second channel is in fluid communication with a plurality of said first channels.

Advantageously, said at least one second channel is formed by two opposite sidewalls connected by a connector portion. Such a connector portion forming the bottom surface of the second channel may be arranged in one or more of the first channels. This means that such first channel comprises a first wall situated in generally opposed relation to a second wall and said connector portion between said first wall and said second wall, said connector portion comprising a surface that cooperates with that first wall and said second wall to define said second channel as part of the first channel. The first channel has a part extending through the entire material facing and the channel has a depth less than the thickness of the material facing defining the second channel. Preferably, such connector portion is associated with a second surface of the material facing so that the second channel is also formed in the first surface of the material facing. The connector preferably has a thickness less than half of a thickness of said friction material facing. This ensures that the second channel formed above the connector portion has a depth corresponding to at least half of the thickness of said friction material facing to ensure sufficient fluid flow through said second channel. In a preferred embodiment the friction material facing comprises a plurality of spaced first channels comprising such connector portion forming a second channel. Advantageously, said connectors are associated with a second edge of the friction material facing whereas the first channels are open to the opposed first edge of the friction material facing. Alternatively, a first plurality of connectors may be associated with a first side or edge whereas a second plurality of said connectors is associated with the opposed second edge of the friction material facing. This allows to arrange the second channels for example in a alternating matter on both edges of the friction material facing. Accordingly, also the first channels may be arranged in an alternating matter on the first and on the opposed second side of the friction material facing.

The length of said first channel is preferably greater than fifty percent of the material width. Further, preferably the second channel has a length less than the length of the first channel. This allows to provide long first channels which preferably are deeper than the shallow second channels to enhance the fluid flow across the material.

Said connector portion may have a surface which is planar, U-shaped or V-shaped in cross section, so that the bottom surfaces of the second channel is shaped correspondingly.

Said side walls of said at least one first channel and/or said at least one second channel may be angled to each other and/or to said first surface. This means that the side wall may be not perpendicular to an imaginary plane defined by a planar surface of the connector portion or to one of the first or second edge of the facing. So the first and/or second channel may have a greater width at the first surface than at the second surface or the bottom surface of the channels, respectively. Further, the channels may for example have a greater width at one edge of the material than at the opposed end of the channel to enhance the fluid communication from one side of the channel to the other.

Further, the side walls of said at least one first channel and/or said at least one second channel may also be curved or angled. So the first and/or second channel may define a curved line or chevron shape. The first and second channels define friction areas between the channels. According to the shape of the channels these friction areas may be defined by generally straight edges, generally curved edges, multi sided or chevron shaped edges.

Said first channel preferably forms in an aperture in an edge of said friction material. This means that the channel is open to the edge to allow fluid to pass from the surface of the friction material through said channel to the edge of the material. In a preferred embodiment a plurality of spaced a apertures is open to a first edge and at least some apertures are open to the second edge.

The friction material facing comprises a first and an opposed second edge, wherein said first and/or said second channels .extend in a direction between said first and second edge. Thereby, preferably each of a plurality of first channels each extend through said friction material and has a first channel length that is less than a material width defined by said first edge and said second edge. Further, each of said plurality of second channels may have a second channel length which generally corresponds to said material width. Alternatively, also the second channels may have a second channel length that is less than said material with. Further, in a prefered embodiment each of said plurality of second channels comprises a second channel length that is less than said first channel length.

Further, said first and/or said second channel may be angled to said first or second edge of the material. This allows longer channels to improve the drainage of fluid from the material surface. Alternatively or additionally at least one first and/or second channel may extend substantially parallel to a first or second edge of the friction material facing.

Further the invention refers to a friction member comprising a support element and a friction material facing according to the preceding description. The friction material facing is arranged on said support element preferably by an adhesive. The support element may be made from metal or any other suitable material. The friction member may be a synchronizer ring a clutch plate a transmission band or a drum break lining, etc. The adhesive preferably is applied to the second surface of the friction material facing so that the friction material facing can easily be attached to the support element.

In a further aspect the invention refers to a method for providing a friction material facing according to the preceding description and the claims. Preferably the first channels are provided in the friction material facing before attaching the friction material facing to a support member. The second channels may also be formed before attaching the material to the support member or simultaneously when attaching the material to the support member or after attaching the material to the support member. The first and/or second channels may be machined, lasered or embossed into the friction facing material or made by driving a platen into said friction facing material.

Preferably at least one second channel is generated by a plate comprising a rib in form of the channel. This platen is forced into said friction material facing so that the rib forms said at least one second channel. The platen comprising one or more ribs for forming the channels may also be used for pressing the friction material facing onto a support member. Therefore an adhesive may be provided on the second surface, i.e. the surface opposite to the friction surface, of said friction material facing. Then, said friction material facing is aligned with said platen comprising the ribs for forming the second channel. Then the platen is driven to force said friction material facing onto the support member and simultaneously forming the second channel in the first surface of the friction material facing.

Preferably the friction material facing is stamped from a web of friction material in which at least one of said first and/or second channels is preformed. The first channels, i. e. the channels extending to the entire facing from the first to the opposed second surface may be formed when stamping the friction material facing from the web. Preferably, at least one of said first channels is formed by stamping said friction material facing from the web.

Preferably an adhesive layer is applied onto said second surface of said friction material web before stamping the friction material facing from said web.

Preferably the invention comprises a friction material facing comprising a material facing having a first edge, a second edge, a first surface and a second surface; a plurality of spaced first channels extending from the first edge toward the second edge a predetermined distance; at least one of the plurality of spaced first channels extending between the first surface and the second surface through the material facing a first predetermined depth; and the material facing further comprising a second channel defining a predetermined second channel area extending between the first surface and the second surface a second predetermined depth, the second channel enabling fluid communication between a first area associated with a first side with a second area associated with a second side.

Preferably the invention comprises a friction material for use on a friction material support, the friction material comprising a first edge associated with a first area; a second edge associated with a second area; a friction surface for engaging a friction component; an adhesive surface for adhering said friction material onto the friction material support; a plurality of spaced apertures having an opening associated with the first edge, at least a portion of each of the plurality of spaced apertures defining an first channel in the friction material for receiving fluid; and at least one second channel also capable of receiving fluid and at least one second channel having a second channel depth that is less than a thickness of said material.

Preferably the invention comprises a friction material facing comprising a friction material; a plurality of first channels in the friction material; and a plurality of second channels in the friction material, the plurality of second channels and the plurality of first channels being capable of fluid communication.

Preferably the invention comprises a friction member for use in a transmission assembly, the friction member comprising a metal support ring; a friction material; an adhesive for securing said friction material onto said metal support ring; the friction material comprising a first edge associated with a first area; a second edge associated with a second area; a friction surface for engaging a friction component; and an adhesive surface for adhering the friction material onto the friction material support; a plurality of spaced apertures defining an open first channel in the friction material for receiving fluid; and at least one second channel also capable of receiving fluid, and at least one second channel having a second channel depth that is less than a thickness of the material.

Preferably the invention or embodiment comprises A method for forming a friction member comprising the steps of providing a friction facing comprising a plurality of apertures having an open end and a closed end; situating the friction facing onto a support member; and creating a plurality of second channels into the friction facing.

Preferably this invention comprises a method of increasing fluid flow across a facing material comprising the steps of providing a plurality of channels comprising a shallow area and a deep area for permitting fluid to flow from a first area, across a surface of the facing material, to a second area.

Preferably this invention comprises a facing material for increasing fluid flow across a surface of said facing material comprising a plurality of channels comprising a shallow area and a deep area for permitting fluid to flow from a first area, across a surface of the facing material, to a second area.

Further, it is preferred to form and provide friction material in a supply having pre-grooved channels 50.

Other objects and advantages of the invention will be apparent from the following description, the accompanying drawings and the appended claims.

### BRIEF DESCRIPTION OF ACCOMPANYING DRAWING

Fig. 1A is a view of a synchronizer ring having a facing material in accordance with one embodiment of the invention;
Fig. 1B is an exploded view of the area 1B shown in Fig. 1A;
Fig. 2 is an exploded view of a blocker ring depicted in Figs. 1A and 1B with its cooperating elements in a typical power transmission-absorption assembly;
Figs. 3A - 3D are various views of a friction material with an embodiment of the invention showing a plurality of grooves or channels formed by a deep channel and a shallow channel;
Figs. 4A - 4D illustrate another embodiment of the invention;
Figs. 5A - 5D illustrates another embodiment of the invention;
Figs. 6A - 6D illustrate yet another embodiment of the invention;
Figs. 7A - 7D illustrate still another embodiment of the invention;
Figs. 8A - 8D illustrate another embodiment of the invention, illustrating a non-planer connection portion;
Figs. 9A - 9C illustrate another embodiment of the invention;
Figs. 10A - 10D illustrate another embodiment of the invention showing a funnel-shaped opening associated with a second channel;
Fig. 11 illustrates another embodiment of the invention, illustrating the connector portion altering from being positioned in a staggered or altering arrangement in association with either a first side or a second side of the facing material;
Fig. 12 is another illustration of the invention showing second channels alone and a facing material having a plurality of channels having a deep and shallow channel configuration;
Fig. 13 is an illustration of a connector situated between the first side and the second side;
Fig. 14 is an illustration of another embodiment showing a funnel-shaped opening associated with the second or deep channel;
Fig. 15 is another illustration of an open channel defined by generally linear or planer walls;
Fig. 16 is a view illustrating the connectors associated with the first side and a funnel-shaped opening associated with the first channel associated with the second channel;
Fig. 17 is an illustration showing a channel that connects a plurality of first or deep channels;
Fig. 18 illustrates a method for embossing or overlaying the second channels onto the first channels to provide a synchronizer ring having a bonded and grooved friction material mounted thereon in accordance with the invention described;
Fig. 19 is a schematic diagram of the method;
Figs. 20A - 20C illustrate another feature of the invention wherein the plurality of second channels are preformed or premachined into the supply material which is then used to stamp the facings to provide a facing having a plurality of first and second channels that are in fluid communication; and
Figs. 21A - 21C illustrate a stamping from a supply roll having a plurality of preformed or premachined second channels that when stamped provide a facing having a desired pattern of second channels.

### DETAILED DESCRIPTION OF PREFERRED EMBODIMENT

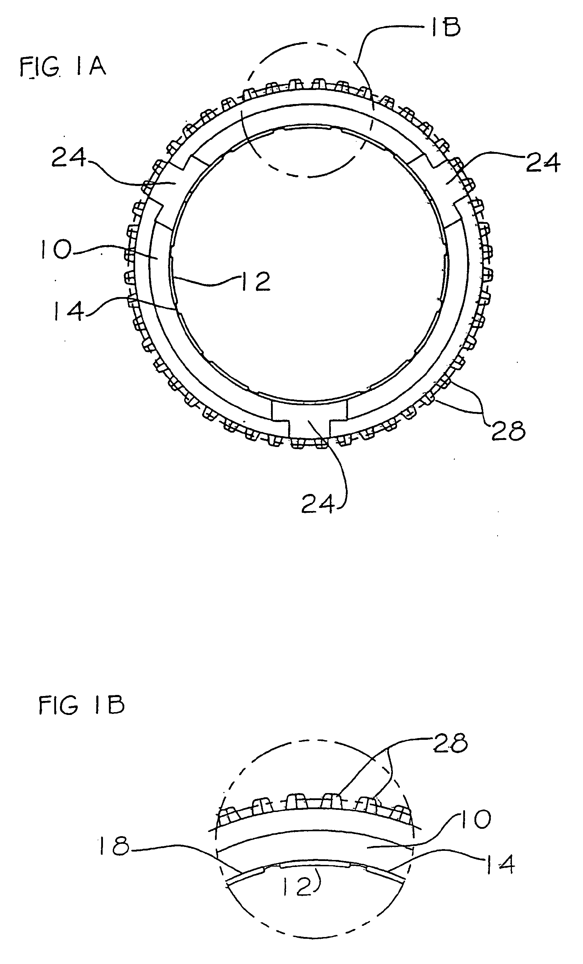

Referring now to the Figures in detail, identical numerals indicate either common elements or the same elements throughout the figures. Figs. 1A - 2 depict a synchronizer ring 10 for use in a transmission assembly (now shown). The synchronizer ring 10 comprises a friction facing material 12 affixed to an inner annular wall 14 (Fig. 1B) of the ring 10. It should be understood that the ring 10 is one element of a power transmission or absorption assembly (not shown), such as that utilized in clutches, brakes, automatic transmissions, limited slip differentials, hoists and other similar friction power transmission and energy absorption devices. One example of an environment in which the synchronizer ring 10 may be utilized is disclosed in U.S. Patent No. 4,732,247 to Frost.

The blocker or synchronizer ring 10 and the friction facing material 12 discussed herein may be utilized with such friction power transmission and energy absorption devices, and it will be understood that friction facing material 12 of the present invention is not limited to such devices. For example, friction-facing material 12 may be utilized in other friction devices such as clutch plates, torque converter clutches, and transmission bands. Moreover, it is contemplated that the material of the present invention could be utilized in other devices where the control of fluid flow is required, such as gaskets, filters, nozzles and the like.

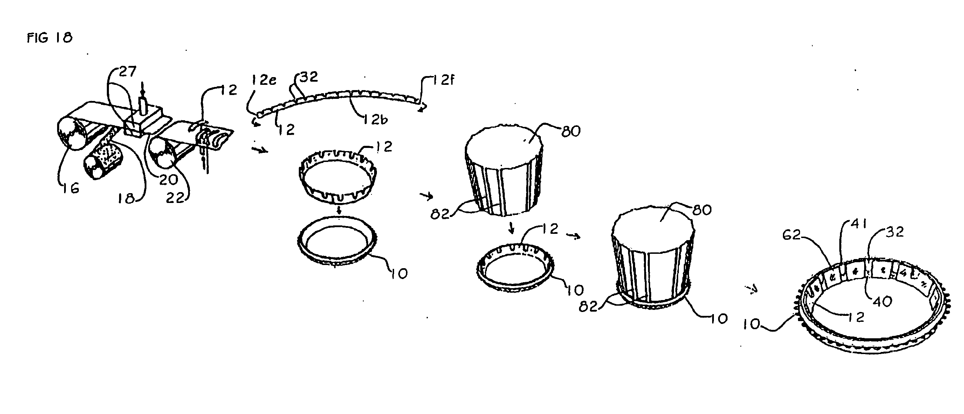

The friction facing material 12 may comprise a woven material such as the material shown and described in U.S. Patent No. 5,615,758 and U.S. Patent No. 6,065,579 or a composite, paper material or other material, such as is shown and described in U.S. Patent Nos. 4,639,392; 4,700,823; 5,324,592; 5,662,993; 5,083,650; 5,585,166; and 5,989,390. In one embodiment, the material comprises part CM-6500, also known as EF-5010 friction material available from Sulzer Euroflamm US or Euroflamm GmbH, the assignee of this application. In general, and as will be described later herein relative to Figs. 18-22C, friction facing material 12 may be provided from a supply roll 16 (Fig. 18) and comprises an adhesive layer 18 which is formed or applied to on a first side 20 to provide a finished supply 22. As described in detail later herein, the friction facing material 12 is then stamped from the supply 22 and further processed and secured to the ring 10.

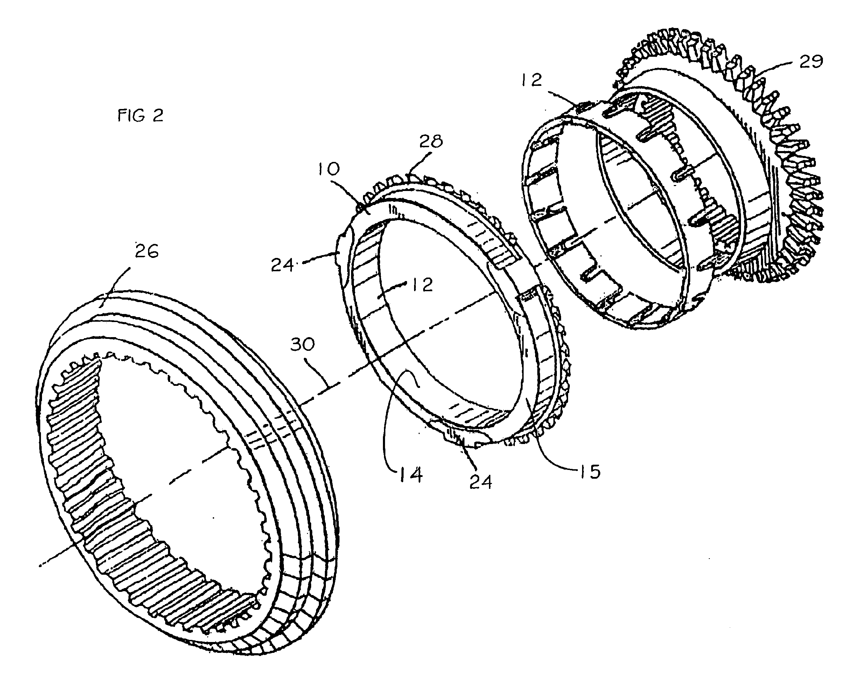

As best illustrated in Fig. 2, the blocker ring 10 comprises three raised lugs 24 equally spaced at 120-degree intervals around the blocker ring 10. The lugs 24 may be nested within associated hub notches of another member 26 (Fig. 2) of the assembly (not shown).

The blocker ring 10 also has a tooth or spline surface 28 (Figs. 1A - 2) formed on an outer surface or circumference thereof which is engageable with the power transmission - absorption assembly and thereby able to clock or rotate member 26 in accordance with a cooperating friction element 29 (Fig. 2) causing movement along inner annular wall 15. As best seen in Figs. 1A - 2, friction facing material 12 of the present invention is affixed to the inner wall 14 of annular wall 15 of blocker ring 10 by means of the layer of adhesive 18 (Fig. 1B and 18), such a nitrile phenolic adhesive or other suitable adhesives as are conventionally known. It will be understood that cooperating friction element 29 (Fig. 2) is moveable along a longitudinal axis 30 in order to engage and disengage the blocker ring 10.

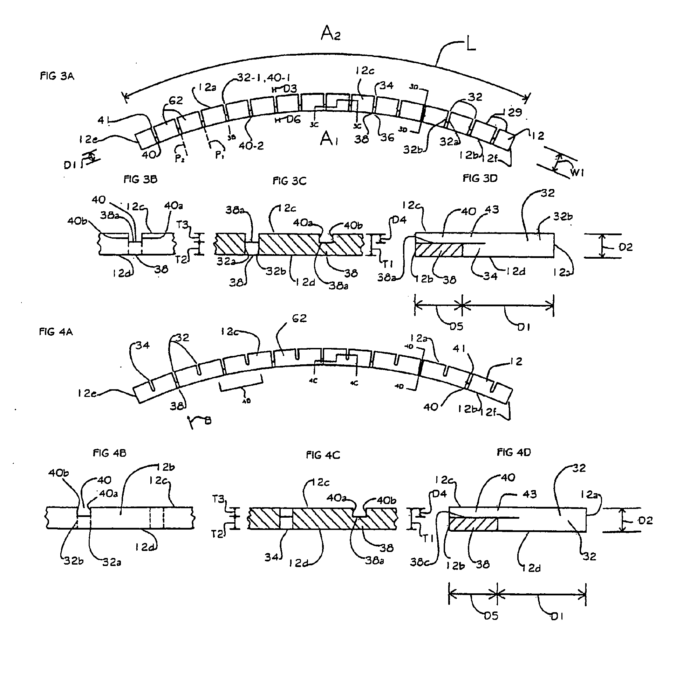

Figs. 3A - 17 are views of various embodiments of the invention. As illustrated in Figs. 3A - 3D, the friction facing material 12 of one embodiment comprises a first edge 12a, a second edge 12b, a top surface 12c, and a bottom surface 12d (Fig. 3B). The friction facing material 12 further comprises a plurality of through slots, grooves or channels 41 comprised of a combination of a plurality of spaced slots, grooves or first channels 32 (Fig. 3A) and a second plurality of spaced slots, grooves or second channels 40. Notice that each of the spaced first channels 32 each comprise a first area 34 associated with the first side 12a and a second area 36 associated with the second side 12b. For ease of illustration, one or more channels 32, 40 and 41 will be described, but it should be understood that these features apply to one or more of the other channels 32, 40 or 41 in the facing material 12.

As illustrated in Fig. 3A, notice that the spaced first channels 32 lie in radial planes, such as radial planes P₁ and P₂. As viewed in Fig. 3A, the first channels 32 are generally perpendicular to a circumference defined by edge 12a. As will be described in greater detail later herein, the friction facing material 12 also comprises a plurality of second grooves, slots or channels 40 that, with said first channels 32, permit a desired amount of lubrication and fluid to flow through or across the facing material 12 and between said first and second areas 34 and 36 and areas A₂ and A₁, respectively.

Each of the spaced channels 41 is dimensional to have desired fluid flow characteristics. The first channel 32 is a deep channel or slot and has a length that extends a distance or dimension D1 (Fig. 3D) that is generally the width W1 (Fig. 3A) of the facing material 12. As illustrated in Figs. 3B - 3D, each of the plurality of first channels 32 is defined by a first wall 32a (Fig. 3C) and a second wall 32b which may be in an opposed or parallel relationship. Alternatively, the walls 32a and 32b may be angled, non-linear or curved such as those described and illustrated later herein. Thus, it should be appreciated that the walls 32a and 32b could be formed so that they are not parallel and so that, for example, a dimension D3 (Fig. 3D) of the first area 34 is larger than a dimension D6 (Fig. 3A) at the closed end 36 of the first channel 32. Selecting these dimensions D3 and D6 and the shape of walls 32a and 32b facilitates providing a desired amount of fluid flow into the first channel 32 and second channel 40.

Note that the facing material 12 has a connector portion 38 situated between walls 32a and 32b. A top surface 38a cooperates with walls 32a and 32b to define the second channel 40. The connector 38 is a length D5. In one embodiment, the channel 40 is formed by compressing the material 12 above the connector 38. Thus, the facing material 12 comprising the connector 38 is compacted of densified when the material 12 is embossed or pressed to provide the channel 38. Alternatively, the second channel 40 may be machined, laser cut or otherwise formed or provided in the facing material 12 to define the second channel 40 and connector 38.

In the embodiment described, the first channel 32 has a depth D2 (Fig. 3D) that generally corresponds to a thickness T1 (as viewed in Fig. 3C) of the friction facing material 12. Note that the connector 38 comprises a thickness T2 and a length D5 (Fig. 3D). In the embodiment being described, the area 43 above the connector 38 (as viewed in Fig. 3D) generally defines the second channel 40 and the area defined by the dimensions D2 and D5 in Fig. 3D generally define the first channel 32. As shown, the second channel 40 is in fluid communication with the first channel 32, as illustrated in Figs. 3A - 3D. As fluid enters the second area 36, it moves from a first area A 1 (Fig. 3A) towards and through the second channel 40 and through the first channel 32 to a second area A2.

In one embodiment, the dimensions are illustrated in the following Table I:

**TABLE 1**

| Dimension Shown in Figs. 3A - 3D | Value |
|---|---|
| D 1 | 0,71 am (.28 inch) |
| D2 | 0,08 cm (.032 inch) |
| D3 | 0,32 cm (.125 inch) |
| D4 | 0,04 cm (.015 inch) |
| D5 | 0,36 cm (.14 inch) |
| L | 23,88 cm (9.4 inches) |
| T1 | 0,08 cm (.032 inch) |
| T2 | 0,04cm (.017 inch) |
| W1 | 1,09 cm (.43 inch) |

As can be seen from the illustration in Fig. 3C, each of the plurality of second channels 40 defines a shallow depth D4 (as viewed in Fig. 3C), which is defined by the height or thickness T2 of connector 38. In contrast, note that each of the plurality of first channels 32 is a deep channel that extends completely through the thickness T1 (Fig. 3C) of the friction facing material 12. A length or dimension D5 (Fig. 3D) of connector 38 also defines the size of channel 40. For example, a larger dimension D5 may result in a smaller channel 40 and vice versa.

In the embodiment illustrated in Figs. 3A - 3D, the plurality of spaced first channels 32 and plurality of second channels 40 are overlapped or in fluid communication, as illustrated in Fig. 3A, to provide the combined channel 41. However, as will be illustrated in several of the other embodiments shown in Figs. 4A - 18, the plurality of second channels 40 may be provided in any desired arrangement, such as in an arrangement where the second channel 40 is not provided in communication with each of the plurality of first channels 32. For example, Figs. 4A - 4D illustrate a staggered arrangement. Fig. 4A illustrates a plurality of first slots or channels 32, which are separate from the channels 41 comprising a combination of first channel 32 and second channel 40. The plurality of first channels 32 and those channels 41 comprising a second channel 40 in fluid communication with the first channel 32 may be arranged or provided in material 12 in any desired configuration. Thus, the material 12 shown in Fig. 4A, however, may comprise a combination of channels 32 and channels 41 having a plurality of first channels 32 that are in fluid communication with a plurality of second channels 40. Notice the staggered arrangement of the various channel 32 and channel 32/channel 40 combinations in Fig. 4A. In the illustration shown in Fig. 4B - 4D, every other channel 32 comprises a combination of a deep first channel 32 alone or a first channel 32 in combination with a shallower second channel 40. It should be understood that the dimensions of the various components in the embodiment shown in Figs. 4A - 17 are similar to those described earlier relative to Figs. 3A - 3D. However, the first channels 32 shown in Fig. 4A - 4D do not have a second channel 40 in fluid communication therewith and are, therefore, closed and do not permit fluid to flow there through. Consequently, they are closed to fluid flow at said second area 36.

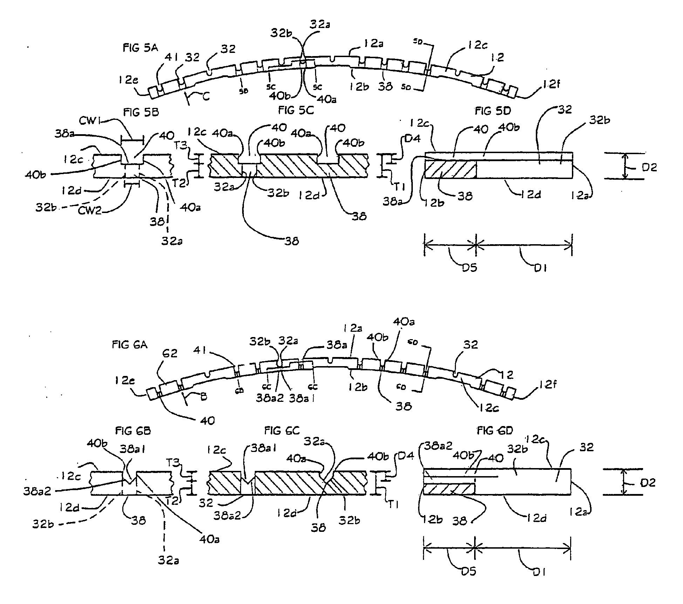

In another embodiment, the first channel 32 and second channel 40 may comprise different widths as will now be described relative to figs. 5A - 5D. As illustrated in Fig. 5A, the friction facing material 12 is shown comprising the plurality of first channels 32. Notice in Figs. 5B - 5D that the shallow or second channel 40 is defined by walls 40a and 40b and has a width CW1 (Fig. 5B) that is wider than a width CW2 (Fig. 5C) defined by walls 32a and 32b of the first channel 32.

As illustrated in Figs. 3D, 4D and 5D, the connector 38 comprises a top surface 38a that shown is generally planar and parallel to the surface 12c in those embodiments. It should be understood, however, that the connector 38 may be defined by a shape that is other than planar and that has an orientation other than generally parallel to the surface 12c. For example, Figs. 6A - 6D illustrate another embodiment of the invention similar to the embodiment shown in Figs. 5A - 5D, except that the connector 38 comprises a surface 38a which is generally V-shaped in cross section and has a plurality of planar surfaces 38a1 and 38a2 as best illustrated in Figs. 6B and 6C.

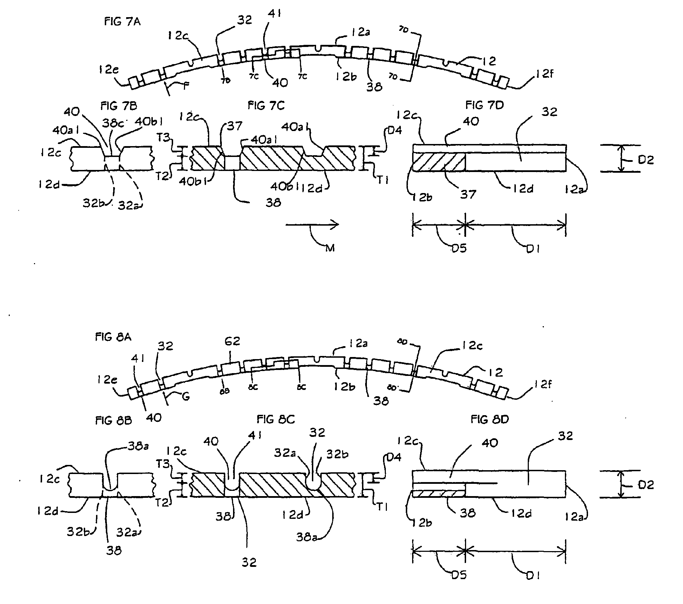

It should also be understood that each of the plurality of first channels 32 is defined by the walls 32a and 32b, while each of the plurality of second channels 40 may be defined by walls 40a and 40b. The walls 40a and 40b that define each of the plurality of channels 40 may be parallel as illustrated in Figs. 3A - 6D. Alternatively, they maybe angled relative to the surface 12c, as illustrated by walls 40a1 and 40b1 in Figs. 7A - 7C, in order to facilitate fluid flow through the second channel 40 and any first channel 32 in fluid communication therewith. It is expected that the angled walls 40a1 and 40b1 facilitate separation between surface 12c and a mating friction surface (not shown) as the fluid flows, for example, upward (as viewed in Fig. 7C) along wall 40b1 toward a corner or ridge 37 and onto surface 12c as the facing 12 moves in the direction of arrow M in Fig. 7C.

Fig. 8A - 8D illustrates still another embodiment wherein the surface 38a of connector 38 is generally U-shaped in cross section.

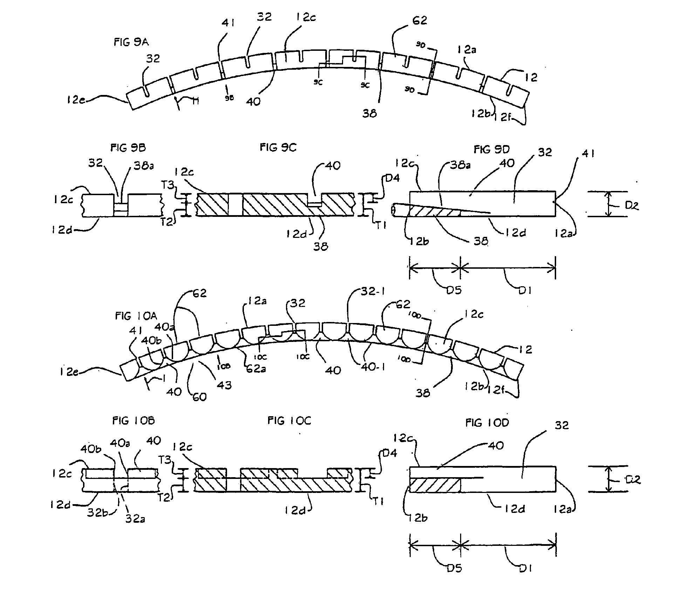

It should be appreciated that the surface 38a may be parallel to the surface 12c or 12d, such as in the embodiment shown in Figs. 3A, 4A, 5A and 7A. However, it is not confined to this orientation, and it could be defined by a surface 38a that is not generally parallel to either the surface 12c or surface 12d. For example, Figs. 9A - 9D illustrates the friction facing material 12 comprising a connector 38 and connector surface 38a that lies in a plane that is angled relative to the surface 12c and surface 12d as shown. Thus, it should be understood that the configuration of the first channels 32 and second channels 40 and the various walls 32a, 32b, 40a and 40b that define those channels 32 and 40, as well as the shape, configuration and size thereof and of each connector 38 and surface 38a, each may be selected and configured as desired in order to provide the first channel 32 and second channel 40 or combined channel 41 with the desired dimensions and fluid flow characteristics. Angling the surface 38a of connector 38a predetermined angle θ, as illustrated in Fig. 6A - 6D and 9A - 9D, for example, facilitates increasing the fluid flow into and through the second channel 40 and first channel 32.

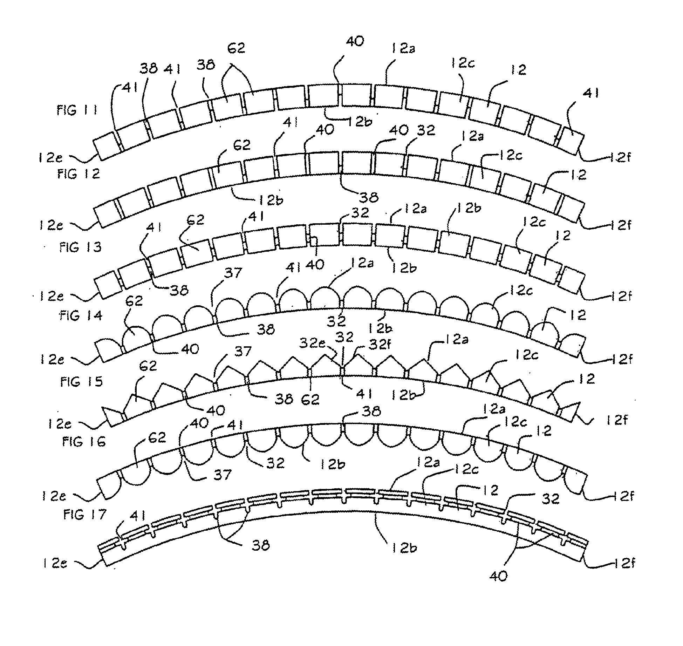

It should be understood that the friction facing material 12 may have connectors 38 situated, as illustrated in Fig. 3A. Alternatively, the connectors 38 may be situated, arranged or formed closer to the second side 12b. Moreover and as shown in the embodiment illustrated in Fig. 11, the connectors 38 may be provided adjacent to both sides 12a and 12b in a staggered or alternating configuration as shown.

Alternately, the connectors 38 could be provided between the first edge 12a and second edge 12b as shown in Fig. 13. As mentioned earlier herein, the second channels 40 may be provided in combination or fluid communication with one or more of the first channels 32. As illustrated in Fig. 12, the second channels 40 may be provided alone and/or in a staggering or alternate configuration or arrangement with a combination of channels 41 each comprised of a first channel 32 and second channel 40 that are in fluid communication. Again, the number of first channels 32 and second channels 40 and the number of channels 41 comprised of the first channel 32 in fluid communication with the second channel 40 may vary and will depend upon the application in which the friction facing material 12 is used. Although not shown, it is also contemplated that facing 12 could comprise a channel 32, a channel 40 and a combined channel 41.

It should be appreciated that the second channels 40 comprises a funnel-shaped opening 43 defined by walls 40a and 40b in Fig. 10A. Each opening 43 is shaped and configured to facilitate controlling funneling flow as desired. This facilitates causing a pumping action into channel 32. Alternatively, as illustrated in the various embodiments shown in Figs. 14 - 16, walls 32c and 32b may be accurate to define a funnel shape of opening 37 that facilitates fluid flow into the channel 32 as the ring 10 rotates. It should be appreciated that if the first channels 32 comprise a funnel-shaped opening 37 as illustrated in Fig. 14, a sucking or vacuum action may occur which facilitates forcing fluid into and through both the second channel 40 and the first channel 32.

Note that material 12 comprises a plurality of friction areas or segments 62. As illustrated in Fig. 3A, 4A, 11, 12 and 13, the friction material segments 62 may be either square or generally rectangular. Alternatively, they may comprise a scalloped or polygonal shape as illustrated in figs. 14, 15 and 16. In Figs. 14 and 16, the friction material segments 62 may comprise an arcuate edge 62a associated with the second edge 12b of the friction facing material 12. The connectors 32 may be associated with the second edge 12b as illustrated in Fig. 10A. Alternatively, the arcuate or scalloped edge may be provided on the first edge 12a and the connector 38 may be provided closer to the first edge 12a, as illustrated in Fig. 16.

Still another embodiment of the invention is illustrated in Fig. 15 showing the channels 32 formed by walls 32e and 32f that are generally linear so as to define a friction facing material segment 62 which is generally polygonal. It is expected that shapes such as fig. 17 will have maximum fluid flow in line with known effect of entry effect in fluid flow theory. It is expected that shapes such as Fig. 16 will be effective in retarding the formation of oil hydrodynamic oil films.

It should be understood, therefore, that the friction material segments 62 may be comprised of and define different shapes and sizes to facilitate increasing or decreasing fluid flow as the ring 10 rotates.

In the embodiments illustrated in Figs. 1 - 16, the shallow second channels 40 were situated in a spaced relationship along a plurality of radial lines, such as lines P₁ and P₂ in Fig. 3A. If desired, however, it is also contemplated that each of the friction segments 62 could comprise one or more of the second channels 40 that are circumferentially oriented and extending partly or entirely through the material between ends 12e and 12f as shown in Fig. 17. This arrangement facilitates increasing fluid flow between and among a plurality of the first channels 32 with which the second channel 40 is in fluid communication.

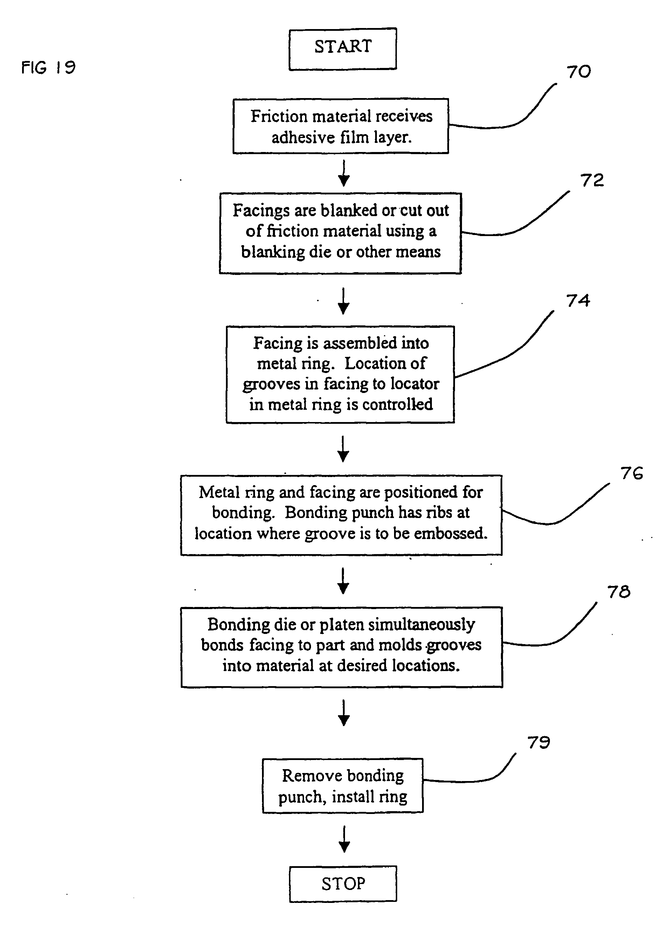

Advantageously, the second channel 40 may be configured in various different arrangements relative to the first channels 32, such as when the first channel 32 is in fluid communication with the second channels 40 as illustrated or when they are not in fluid communication, yet are provided in the surface 12C as shown in the embodiment in fig. 12. Also, the first channels 32 could be configured to have the walls 32a and 32b that are parallel, non-parallel, curved, arcuate or angled, as illustrated and described in embodiments shown in Figs. 14 - 16. A general process or method for forming a synchronizing ring 10 having the friction facing material 12 mounted thereon will now be described relative to Figs. 18 and 19.

First, the supply 16 of friction facing material is provided and an adhesive film layer 18 is secured thereto (Fig. 18 and Block 70 in Fig. 19) to provide the friction facing material supply 22. At Block 72 in Fig. 19 and as illustrated in Fig. 18, the friction facing material 12 is stamped out of the supply 16 using a die 27. Notice that in the embodiment being described, the die 17 stamps each facing 12 with the plurality of first channels 32 therein.

At Block 74 (Fig. 19), the ends 12e and 12f are brought together as illustrated in Fig. 18 and then situated on the surface 14 (Fig. 1B) of ring 10.

At Block 76 in Fig. 19 and as illustrated in Fig. 18, a heated bonding punch 80 is situated and aligned in operative relationship with the ring 10 such that one or more of the plurality of ribs 82 on the punch 80 forms or embosses the second channels 40 in the desired location on the facing material 12 when the punch 80 is actuated from the open position to the closed or bonding/embossing position as shown in Fig. 18. The punch 80 is heated so that in the embodiment being described it simultaneously forms the channels 40 in the desired location on the friction facing material 12d and causes the heat-activated adhesive on the surface 12 to bond to the surface 14. It should be appreciated, however, that some materials 12 may not require heat activation.

At Block 79 (Fig. 19), the bonding punch 80 is removed from the ring 10 and the ring 10 is subsequently installed into a friction environment, such as the environment described earlier herein relative to Fig. 2.

The ribs 82 are arranged on punch 80 so that the second channels 40 become aligned with and in fluid communication with some or all of the first channels 32 and have one or more of the other features or arrangements described earlier herein relative to Figs. 3A - 17.

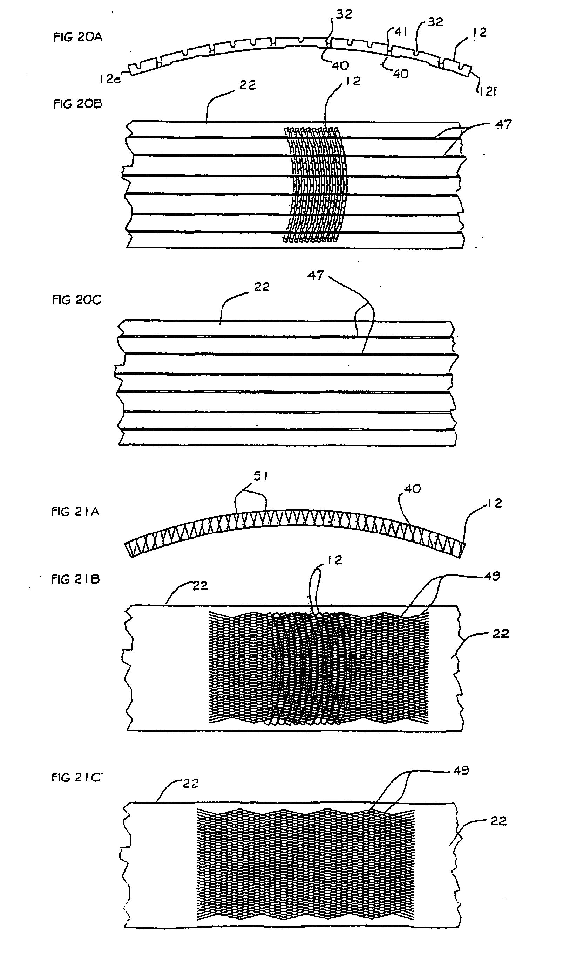

Referring now to Figs. 20A - 21C, the process may comprise another feature which facilitates manufacturing a plurality of facings 12 with one or more pre-formed channels 47 that will define or provided the second channel 40. in the embodiment shown in Figs. 20A - 20C, for example, the facing 12 is stamped or die cut from the supply 22 having pre-formed grooves or channels 47. In the embodiment shown in figs. 21A - 21C, notice that the supply 22 comprises the plurality of second channels 49 previously formed, machined, laser cut or embossed therein in a predetermined or desired pattern. As illustrated in Figs. 20B and 21B, the facings 12 are then die cut or stamped from the supply 22. The stamped facing 12 comprises one or more the first channels 32 that are in fluid communication with the second channel 40 as described earlier herein. After processing, the resulting facing 12, illustrated in fig. 21A, comprises both the first channels 32 and the second channels 49. In the illustration shown in Fig. 21A, the supply 22 may be provided such that several of the second channels 49 overlap and are in communication with the first channels 32 after the facing 12 is stamped from the supply 20.

In the embodiment shown in Figs. 21A - 21C another preformed or pre-grooved supply material 22 is shown having a plurality of channels 49 provided in the material 16 in a non-linear, non-parallel or crisscross pattern as illustrated in Fig. 21C. As shown in Fig. 21B, the individual facings 12 are stamped from the supply material 22 to provide the finished facing 12 (Fig. 21A) with angled second channels 51. Notice that in this facing 12 only the second channels 40 are provided in the facing 12 and no first channels 32 are provided. Thus, it should be appreciated that the grooves or second channels 47 and 49 could be provided in any desired pattern selected and they could be pre-formed in the supply before the facing 12 is cut or stamped therefrom in order to achieve the fluid flow characteristics desired.

Advantageously, the embodiments shown and described in the other features of the invention which should now be apparent from the above description and appended claims, provide means, apparatus and method for facilitating fluid flow across a face or surface 12c of a facing material 12 by providing grooves or channels 32, 40, 41, 49 and 51 in a contemplated or predetermined pattern. Such pattern may include an overlapped combination of the first channel 32 with the second channel 40, as described earlier, so that fluid may flow through the channels 32 and 40.

In the embodiment described, the first channels 32 are stamped, and the second channels 40 are pressed or embossed as illustrated in fig. 18. It should be understood, however, that the channels 40 could be machined, such as by milling, turning or grinding, or even lasering. Also, for ease of illustration, the first channel 32 and second channel 40 have been described as being provided in the facing 12 separately. However, it is contemplated that combined channel 41 may be provided or defined in the material 12 in a single operation, such as a single laser or machining step.

Although not shown, in another embodiment, the material 12 may be bonded to surface 14 of ring 10 and thereafter the channels 32 and/or 40 are cut, machined or lasered therein. Also, it is contemplated that the channels 40 could be cut to a depth that exceeds 100% of the thickness or depth D1 (Fig. 3A) of material 12, which means that the channels 40 would be partly formed or cut into the wall 14 of ring 10. Also, the widths CW1 (Fig. 5B) and CW2 may be the same, as shown in Fig. 3A. Alternatively, width CW2 can be wider (as shown in fig. 5A) or narrower than CW1.

## Claims

1. A friction material facing comprising a first surface (12c) being the friction surface and an opposed second surface (12d) and at least one first channel (32) and at least one second channel (40) provided in the first surface, **characterized in that**
said at least one first channel (32) extends in a direction from said first surface (12c) to said second surface (12d) in a first predetermined depth (D2)and said at least one second channel (40) extends in the direction from said first (12c) to said second surface (12d) in a second predetermined depth (D4) different from said first predetermined depth (D2).

2. The friction material facing according to claim 1 **characterized in that** said first predetermined depth (D2) traverses the entire distance (T1) between said first (12c) and said second (12d) surface.

3. The friction material facing according to claim 1 or 2 **characterized in that** said second predetermined depth (D4) is less than one hundred percent of the distance (T1) between said first (12c) and said second (12d) surface.

4. The friction material facing according to one of the preceding claims **characterized in that** a plurality of said first (30) and/or said second (40) channels is provided in said first surface (12c) spaced from each other.

5. The friction material facing according to claim 4 **characterized in that** at least one of said second channels (40) is situated between a pair of said first channels (30).

6. The friction material facing according to one of the preceding claims **characterized in that** said at least one second channel (40) is coupled with said at least one first channel (30) to allow fluid communication between said first (30) and said second (40) channel or vice versa.

7. The friction material facing according to one of the preceding claims, **characterized in that** said at least one second channel (40) is formed by to opposite side walls (40a, 40b) connected by a connector portion (38).

8. The friction material facing according to claim 7 **characterized in that** said connector portion (38) has a surface (38a) which is planar, U-shaped or V-shaped in cross section.

9. The friction material facing according to one of the preceding claims **characterized in that** the side walls (40a, 40b) of said at least one first channel (30) and/or said-at least one second channel (40) are angled to each other and/or to said first surface (12c).

10. The friction material facing according to one of the preceding claims **characterized in that** the side walls (40a, 40b) of said at least one first channel (30) and/or said at least one second channel (40) are curved or angled.

11. The friction material facing according to one of the preceding claims **characterized in that** said first channel (30) forms an aperture in an edge (12a) of said friction material facing (12).

12. The friction material facing according to one of the preceding claims **characterized by** a first (12a) and a second (12b) edge wherein said first (30) and/or said second (40) channel extends in a direction between said first (12a) and said second (12b) edge.

13. The friction material facing according to claim 11 **characterized in that** said first (30) and/or said second (40) channel is angled to said first (12a) or second (12b) edge.

14. The friction facing material according to claim 12 or 13 **characterized in that** said first (30) and/or said second (40) channel extends substantially parallel to said first (12a) or said second (12b) edge.

15. The friction facing material according to one of the preceding claims **characterized in that** said at least one second channel (40) is coupled to at least two of said first channels (30) or that said at least one first channel (30) is coupled to at least two (40) of said second channels.

16. A friction member comprising a support element and **characterized by** a friction material facing (12) according to one of the preceding claims arranged on said support element (10).

17. The friction member according to claim 16 **characterized in that** said friction member is a synchronizer ring (10), a clutch plate, a transmission band or a drum brake lining.

18. A method for providing a friction material facing according to one or more of the claims 1 to 15 **characterized by** the following steps:
providing a friction material facing (12) comprising a first surface (12c) being the friction surface and an opposed second surface (12d) and at least one first channel (30) extending in a direction from said first surface (12c) to said second surface (12d) in a first predetermined depth (D2),
situating said friction material facing (12) onto a support member (10), and creating at least one second channel (40) into said friction material facing (12) so that said at least one second channel (40) extends in the direction from said first surface (12c) to said second surface (12d) in a second predetermined depth (D4) different from said first predetermined depth (D2).

19. The method according to claim 18 **characterized in that** said second channel (40) is created after situating said friction material facing (12) onto said support member (10).

20. The method according to claim 19 **characterized in that** creating of said at least one second channel (40) comprises the following steps:
aligning said friction material facing (12) with a suitable platen (80) comprising at least one rib (82),
forcing said platen (80) into said friction material forcing (12) so that said rib (82) forms said at least one second channel (40).

21. The method according to one of the claims 18 to 20 **characterized by** the following steps:
providing an adhesive (18) on said second surface 12d) of said friction material facing (12),
aligning said friction material facing (12) with a suitably platen (80) comprising at least one rib (82),
driving said platen (80) to force said friction material facing (12) onto said support member (10) such that said at least one second channel (40) is formed by said rib (82) while said friction material facing (12) is bonded to said support member (10).

22. The method according to one of the claims 18 to 21 **characterized in that** at least one second channel (40) extending in the direction from said first (12c) to said second (12d) surface in said second predetermined depth (D4) different from said first predetermined depth (D2) is created into said friction material facing (12) before said friction material facing (12) is arranged onto said support member (10).

23. The method according to one of the claims 18 to 22 **characterized in that** said friction material facing (12) is stamped from a web (16) of friction material having at least one of said first (30) and/or second (40) channels provided therein.

24. The method according to claim 23 **characterized in that** at least one of said first channels (30) is formed while stamping said friction material facing (12) from the web (16).

25. The method according to claim 23 or 24 **characterized in that** an adhesive layer (18) is applied onto said second surface (12d) of said friction material web (16) before stamping the friction material facing (12) from said web (16).

## Patentansprüche

1. Reibmaterialbelag mit einer ersten Fläche (12c), die die Reibfläche darstellt, und einer gegenüberliegenden zweiten Fläche (12d) und zumindest einem ersten Kanal (32) und zumindest einem zweiten Kanal (40), die in der ersten Fläche vorgesehen sind,
**dadurch gekennzeichnet, dass**
der zumindest eine erste Kanal (32) in einer Richtung von der ersten Fläche (12c) zu der zweiten Fläche (12d) in einer ersten vorbestimmten Tiefe (D2) verläuft und dass der zumindest eine zweite Kanal (40) in der Richtung von der ersten (12c) zu der zweiten Fläche (12d) in einer zweiten vorbestimmten Tiefe (D4) verläuft, die von der ersten vorbestimmten Tiefe (D2) verschieden ist.

2. Reibmaterialbelag nach Anspruch 1,
**dadurch gekennzeichnet , dass**
die erste vorbestimmte Tiefe (D2) die gesamte Distanz (T1) zwischen der ersten (12c) und der zweiten (12d) Fläche überspannt.

3. Reibmaterialbelag nach einem der Ansprüche 1 oder 2,
**dadurch gekennzeichnet , dass**
die zweite vorbestimmte Tiefe (D4) kleiner als einhundert Prozent der Distanz (T1) zwischen der ersten (12c) und der zweiten (12d) Fläche ist.

4. Reibmaterialbelag nach einem der vorhergehenden Ansprüche,
**dadurch gekennzeichnet, dass**
in der ersten Fläche (12c) mehrere der ersten (30) und/oder der zweiten (40) Kanäle vorgesehen sind, die voneinander beabstandet sind.

5. Reibmaterialbelag nach Anspruch 4,
**dadurch gekennzeichnet, dass**
zumindest einer der zweiten Kanäle i(40) zwischen einem Paar der ersten Kanäle (30) angeordnet ist.

6. Reibmaterialbelag nach einem der vorhergehenden Ansprüche,
**dadurch gekennzeichnet, dass**
der zumindest eine zweite Kanal (40) mit dem zumindest einen ersten Kanal (30) gekoppelt ist, um eine Fluidkommunikation zwischen dem ersten (30) und dem zweiten (40) Kanal oder umgekehrt zu ermöglichen.

7. Reibmaterialbelag nach einem der vorhergehenden Ansprüche,
**dadurch gekennzeichnet , dass**
der zumindest eine zweite Kanal (40) durch entgegengesetzte Seitenwände (40a, 40b) geformt ist, die durch einen Verbinderabschnitt (38) verbunden sind.

8. Reibmaterialbelag nach Anspruch 7,
**dadurch gekennzeichnet, dass**
der Verbinderabschnitt (38) eine Fläche (38a) besitzt, die im Querschnitt planar, U-förmig oder V-förmig ist.

9. Reibmaterialbelag nach einem der vorhergehenden Ansprüche,
**dadurch gekennzeichnet , dass**
die Seitenwände (40a, 40b) des zumindest einen ersten Kanals (30) und/oder des zumindest einen zweiten Kanals (40) zueinander und/oder zu der ersten Fläche (12c) angewinkelt sind.

10. Reibmaterialbelag nach einem der vorhergehenden Ansprüche,
**dadurch gekennzeichnet, dass**
die Seitenwände (40a, 40b) des zumindest einen ersten Kanals (30) und/oder des zumindest einen zweiten Kanals (40) gekrümmt oder angewinkelt sind.

11. Reibmaterialbelag nach einem der vorhergehenden Ansprüche,
**dadurch gekennzeichnet, dass**
der erste Kanal (30) eine Öffnung in einem Rand (12a) des Reibmaterialbelags (12) bildet.

12. Reibmaterialbelag nach einem der vorhergehenden Ansprüche,
**gekennzeichnet durch**
einen ersten (12a) und einen zweiten (12b) Rand, wobei der erste (30) und/oder der zweite (40) Kanal in einer Richtung zwischen dem ersten (12a) und dem zweiten (12b) Rand verläuft.

13. Reibmaterialbelag nach Anspruch 11,
**dadurch gekennzeichnet, dass**
der erste (30) und/oder der zweite (40) Kanal zu dem ersten (12a) oder zweiten (12b) Rand angewinkelt ist/sind.

14. Reibbelagmaterial nach einem der Ansprüche 12 oder 13,
**dadurch gekennzeichnet , dass**
der erste (30) und/oder der zweite (40) Kanal im Wesentlichen parallel zu dem ersten (12a) oder dem zweiten (12b) Rand verläuft/verlaufen .

15. Reibbelagmaterial nach einem der vorhergehenden Ansprüche,
**dadurch gekennzeichnet, dass**
der zumindest eine zweite Kanal (40) mit zumindest zwei der ersten Kanäle (30) gekoppelt ist, oder dass der zumindest eine erste Kanal (30) mit zumindest zwei (40) der zweiten Kanäle gekoppelt ist.

16. Reibelement mit einem Trägerelement, und **gekennzeichnet durch** einen Reibmaterialbelag (12) nach einem der vorhergehenden Ansprüche, der an dem Trägerelement (10) angeordnet ist.

17. Reibelement nach Anspruch 16,
**dadurch gekennzeichnet, dass**
das Reibelement ein Synchronisiereinrichtungsring (10), eine Kupplungsscheibe, ein Getriebeband oder eine Trommelbremsauskleidung ist.

18. Verfahren zum Bereitstellen eines Reibmaterialbelags nach einem der Ansprüche 1 bis 15,
**gekennzeichnet durch** die folgenden Schritte, dass:
ein Reibmaterialbelag (12) vorgesehen wird, der eine erste Fläche (12c), die die Reibfläche darstellt, und eine entgegengesetzte zweite Fläche (12d) und zumindest einen ersten Kanal (30) umfasst, der in einer Richtung von der ersten Fläche (12c) zu der zweiten Fläche (12d) in einer ersten vorbestimmten Tiefe (D2) verläuft,
der Reibmaterialbelag (12) auf einem Trägerelement (10) angeordnet wird und zumindest ein zweiter Kanal (40) in dem Reibmaterialbelag (12) erzeugt wird, so dass der zumindest eine zweite Kanal (40) in der Richtung von der ersten Fläche (12c) zu der zweiten Fläche (12d) in einer zweiten vorbestimmten Tiefe (D4) verläuft, die von der ersten vorbestimmten Tiefe (D2) verschieden ist.

19. Verfahren nach Anspruch 18,
**dadurch gekennzeichnet , dass**
der zweite Kanal (40) erzeugt wird, nachdem der Reibmaterialbelag (12) auf dem Trägerelement (10) angeordnet ist.

20. Verfahren nach Anspruch 19,
**dadurch gekennzeichnet , dass**
das Erzeugen des zumindest einen zweiten Kanals (40) die folgenden Schritte umfasst, dass:
der Reibmaterialbelag (12) mit einer geeigneten Platte (80), die zumindest eine Rippe (82) umfasst, ausgerichtet wird,
die Platte (80) in den Reibmaterialbelag (12) gedrängt wird, so dass die Rippe (82) den zumindest einen zweiten Kanal (40) formt.

21. Verfahren nach einem der Ansprüche 18 bis 20,
**gekennzeichnet durch** die folgenden Schritte, dass:
ein Klebstoff (18) an der zweiten Fläche (12d) des Reibmaterialbelags (12) vorgesehen wird,
der Reibmaterialbelag (12) mit einer geeigneten Platte (80), die zumindest eine Rippe (82) umfasst, ausgerichtet wird,
die Platte (80) angetrieben wird, um den Reibmaterialbelag (12) an das Trägerelement (10) zu drängen, so dass der zumindest eine zweite Kanal (40) **durch** die Rippe (82) geformt wird, während der Reibmaterialbelag (12) mit dem Trägerelement (10) verbunden wird.

22. Verfahren nach einem der Ansprüche 18 bis 21,
**dadurch gekennzeichnet , dass**
zumindest ein zweiter Kanal (40), der in der Richtung von der ersten (12c) zu der zweiten (12d) Fläche in der zweiten vorbestimmten Tiefe (D4), die von der ersten vorbestimmten Tiefe (D2) verschieden ist, verläuft, in dem Reibmaterialbelag (12) erzeugt wird, bevor der Reibmaterialbelag (12) an dem Trägerelement (10) angeordnet wird.

23. Verfahren nach einem der Ansprüche 18 bis 22,
**dadurch gekennzeichnet , dass**
der Reibmaterialbelag (12) aus einer Bahn (16) aus Reibmaterial gestanzt wird, das zumindest einen der darin vorgesehenen ersten (30) und/oder zweiten (40) Kanäle besitzt.

24. Verfahren nach Anspruch 23,
**dadurch gekennzeichnet , dass**
zumindest einer der ersten Kanäle (30) geformt wird, während der Reibmaterialbelag (12) aus der Bahn (16) gestanzt wird.

25. Verfahren nach Anspruch 23 oder 24,
**dadurch gekennzeichnet , dass**
eine Klebstoffschicht (18) auf die zweite Fläche (12d) der Reibmaterialbahn (16) vor einem Stanzen des Reibmaterialbelages (12) aus der Bahn (16) aufgebracht wird.

## Revendications

1. Revêtement en matériau de frottement comprenant une première surface (12c) étant la surface de friction et une deuxième surface opposée (12d) et au moins un premier canal (32) et au moins un deuxième canal (40) réalisé dans la première surface, **caractérisé en ce que**
ledit au moins un premier canal (32) s'étend dans une direction depuis ladite première surface (12c) à ladite deuxième surface (12d) dans une première profondeur prédéterminée (D2), et ledit au moins un deuxième canal (40) s'étend dans la direction de ladite première (12c) à ladite deuxième surface (12d) dans une deuxième profondeur prédéterminée (D4) différente de ladite première profondeur prédéterminée (D2).

2. Revêtement en matériau de frottement selon la revendication 1, **caractérisé en ce que** ladite première profondeur prédéterminée (D2) traverse toute la distance (T1) entre ladite première (12c) et ladite deuxième (12d) surface.

3. Revêtement en matériau de frottement selon la revendication 1 ou 2, **caractérisé en ce que** ladite deuxième profondeur prédéterminée (D4) est inférieure à cent pour cent de la distance (T1) entre ladite première (12c) et ladite deuxième (12d) surface.

4. Revêtement en matériau de frottement selon l'une quelconque des revendications précédentes, **caractérisé en ce qu'**une pluralité desdits premiers (30) et/ou desdits deuxièmes (40) canaux est réalisée dans ladite première surface (12c) espacés les uns des autres.

5. Revêtement en matériau de frottement selon la revendication 4, **caractérisé en ce qu'**au moins un desdits deuxième canaux (40) se situe entre une paire desdits premiers canaux (30).

6. Revêtement en matériau de frottement selon l'une quelconque des revendications précédentes, caratérisé en ce que ledit au moins un deuxième canal (40) est couplé avec ledit au moins un premier canal (30) pour permettre une communication fluidique entre ledit premier (30) et ledit deuxième (40) canal ou vice versa.

7. Revêtement en matériau de frottement selon l'une des revendications précédentes, **caractérisé en ce que** ledit au moins un deuxième canal (40) est formé par des parois latérales opposées (40a, 40b) reliées par une portion de connection (38).

8. Revêtement en matériau de frottement selon la revendication 7, **caractérisé en ce que** ladite portion de connection (38) présente une surface (38a) qui est plane, en forme de U ou en forme de V en section transversale.

9. Revêtement en matériau de frottement selon l'une des revendications précédentes, **caractérisé en ce que** les parois latérales (40a, 40b) d'au moins un premier canal (30) et/ou d'au moins un deuxième canal (40) précité sont angulaires l'une à l'autre et/ou à ladite première surface (12c).

10. Revêtement en matériau de frottement selon l'une des revendications précédentes, **caractérisé en ce que** les parois latérales (40a, 40b) dudit au moins un premier canal (30) et/ou dudit au moins un deuxième canal (40) sont courbées ou angulaires.

11. Revêtement en matériau de frottement selon l'une des revendications précédentes, **caractérisé en ce que** ledit premier canal (30) forme une ouverture dans un bord (12a) dudit revêtement en matériau de frottement (12).

12. Revêtement en matériau de frottement selon l'une des revendications précédentes, **caractérisé par** un premier (12a) et un deuxième (12b) bord, où ledit premier (30) et/ou ledit deuxième (40) canal s'étend dans une direction entre ledit premier (12a) et ledit deuxième (12b) bord.

13. Revêtement en matériau de frottement selon la revendication 11, **caractérisé en ce que** ledit premier (30) et/ou ledit deuxième (40) canal est angulaire audit premier (12a) ou deuxième (12b) bord.

14. Revêtement en matériau de frottement selon la revendication 12 ou 13, **caractérisé en ce que** ledit premier (30) et/ou ledit deuxième (40) canal s'étend sensiblement parallèlement audit premier (12a) ou audit deuxième (12b) bord.

15. Revêtement en matériau de frottement selon l'une des revendications précécentes, **caractérisé en ce que** ledit au moins un deuxième canal (40) est couplé à au moins deux desdits premiers canaux (30) ou bien que ledit au moins un premier canal (30) est couplé à au moins deux (40) desdits deuxièmes canaux.

16. Elément de frottement comprenant un élément de support et **caractérisé par** un revêtement en matériau de frottement (12) selon l'une quelconque des revendications précédentes, agencé sur ledit élément de support (10).

17. Elément de frottement selon la revendication 16, **caractérisé en ce que** ledit élément de frottement est une bague de synchronisation (10), un disque d'embrayage, une bande de transmission ou un revêtement d'un frein à tambour.

18. Procédé de réalisation d'un revêtement en matériau de frottement selon l'une ou plusieurs des revendications 1 à 15, **caractérisé par** les étapes suivantes:
réaliser un revêtement en matériau de frottement (12) comprenant une première surface (12c) étant la surface de frottement et une deuxième surface opposée (12d) et
au moins un premier canal (30) s'étendant dans une direction depuis ladite première surface (12c) à ladite deuxième surface (12d) dans une première profondeur prédéterminée (D2),
situer ledit revêtement en matériau de frottement (12) sur un élément de support (10) et créer au moins un deuxième canal (40) dans ledit revêtement en matériau de frottement (12) de sorte qu'au moins un deuxième canal précité (40) s'étend dans la direction depuis ladite première surface (12c) à ladite deuxième surface (12d) dans une deuxième profondeur prédéterminée (D4) différente de ladite première profondeur prédéterminée (D2).

19. Procédé selon la revendication 18, **caractérisé en ce que** ledit deuxième canal (40) est créé après avoir situé ledit revêtement en matériau de frottement (12) sur ledit élément de support (10).

20. Procédé selon la revendication 19, **caractérisé en ce que** la création d'au moins un deuxième canal précité (40) comprend les étapes suivantes:
aligner ledit revêtement en matériau de frottement (12) avec une plaque appropriée (80) comprenant au moins une nervure (82),
forcer ladite plaque (80) dans ledit revêtement en matériau de frottement (12) de sorte que ladite nervure (82) forme ledit au moins un deuxième canal (40).

21. Procédé selon l'une des revendications 18 à 20, **caractérisé par** les étapes suivantes:
réaliser un adhésif (18) sur ladite deuxième surface (12d) dudit revêtement en matériau de frottement (12),
aligner ledit revêtement en matériau de frottement (12) avec une plaque appropriée (80) comprenant au moins une nervure (82),
entraîner ladite plaque (80) pour forcer ledit revêtement en matériau de frottement (12) sur ledit élément de support (10) de telle sorte que ledit au moins un deuxième canal (40) est formé par ladite nervure (82) pendant que ledit revêtement en matériau de frottement (12) est lié audit élément de support (10).

22. Procédé selon l'une des revendications 18 à 21, **caractérisé en ce qu'**au moins un deuxième canal (40) s'étendant dans la direction de ladite première (12c) à ladite deuxième (12d) surface dans ladite deuxième profondeur prédéterminée (D4) différente de ladite première profondeur prédéterminée (D2) est créé dans ledit revêtement en matériau de frottement (12) avant que ledit revêtement en matériau de frottement (12) ne soit agencé sur ledit élément de support (10).

23. Procédé selon l'une des revendications 18 à 22, **caractérisé en ce que** ledit revêtement en matériau de frottement (12) est découpé d'une bande (16) de matériau de frottement ayant au moins un parmi lesdits premier (30) et/ou deuxième (40) canaux réalisés dans celui-ci.

24. Procédé selon la revendication 23, **caractérisé en ce qu'**au moins un desdits premiers canaux (30) est réalisé pendant le découpage dudit revêtement en matériau de frottement (12) de la bande (16).

25. Procédé selon la revendication 23 ou 24, **caractérisé en ce qu'**une couche adhésive (18) est appliquée à ladite deuxième surface (12d) de ladite bande (16) en matériau de frottement avant le découpage du revêtement en matériau de frottement (12) de ladite bande (16).
